# EUROPÄISCHE PATENTSCHRIFT

(11) **EP 2 914 938 B1**
(45) Veröffentlichungstag und Bekanntmachung des Hinweises auf die Patenterteilung: **13.09.2017**
(21) Anmeldenummer: 13785470.9
(22) Anmeldetag: 01.11.2013
(51) Int. Cl.: G01F 1/684, G01F 1/688

(54) **LUFTMASSENMESSER**
AIR MASS FLOWMETER
MESUREUR DE MASSE D'AIR

(30) Priorität: 02.11.2012 DE 102012220019
(43) Veröffentlichungstag der Anmeldung: 09.09.2015
(73) Patentinhaber: Continental Automotive GmbH, 30165 Hannover (DE)
(72) Erfinder: KNITTEL, Thorsten, 93080 Pentling (DE); SETESCAK, Stephen, 93080 Pentling (DE)
(86) Internationale Anmeldenummer: PCT/EP2013/072852
(87) Internationale Veröffentlichungsnummer: WO 2014/068078

(56) Entgegenhaltungen:
- JP-A- S58 139 481
- US-A- 5 629 482

## Beschreibung

Die Erfindung betrifft einen Luftmassenmesser mit einem in mikroelektromechanischer Bauweise ausgebildetem Sensorelement, das ein Heizelement und mindestens ein Temperatursensorelement aufweist, wobei das Temperatursensorelement als Thermoelement ausgebildet ist, wobei das Thermoelement aus einer Vielzahl von in Reihe geschalteten Thermopaaren besteht, die nacheinander vom einem elektrischen Strom durchflossen werden und wobei ein Thermopaar aus einem ersten metallischen Leiter und einem zweiten metallischen Leiter besteht, die an jeweils einem Ende durch eine Verbindungsstelle miteinander verbunden sind und wobei der erste metallische Leiter und der zweite metallische Leiter aus unterschiedlichen Metallen ausgebildet sind.

Luftmassenmesser werden beispielsweise in Kraftfahrzeugen zur Ermittlung der von einer Brennkraftmaschine angesaugten Luftmasse verwendet. Auf der Basis einer möglichst zuverlässigen Information über eine angesaugte Luftmasse kann eine Verbrennung durch eine elektronische Steuerung der Brennkraftmaschine dahingehend optimiert werden, dass eine genau auf die Luftmasse abgestimmte Kraftstoffmenge den jeweiligen Brennräumen zugeführt wird. Im Ergebnis wird dadurch eine bessere Energieausnutzung bei verringertem Schadstoffausstoß erzielt.

Aus der DE 44 07 209 A1 ist ein Luftmassenmesser bekannt, der in einen Ansaugkanal zur Bestimmung einer Luftmasse eingesteckt wird, wobei ein definierter Anteil der Gesamtströmung den Luftmassensensor durchströmt. Hierzu ist dieser als Einsteckkanal Luftmassenmesser ausgebildet. Der Luftmassenmesser umfasst ein in einem Messkanal angeordnetes Sensorelement, eine in einem Gehäuse angeordnete Elektronik zur Auswertung und/oder Erfassung der Messwerte des Sensorelementes, sowie einen Auslasskanal jenseits des Sensorelements. Für eine platzsparende Anordnung werden die genannten Kanäle bzw. Luftführungswege U-, S- oder C-förmig ausgebildet, so dass eine insgesamt kompakte, als Einsteckelement ausgebildete, Vorrichtung gebildet wird.

Die US 5, 393, 351 A1 offenbart einen Luftmassenmesser, bei dem die als Thermoelemente ausgebildeten Temperatursensorelemente im Randbereich des Sensorelementes durch zusätzliche Thermoelemente geschützt werden.

Die DE 100 57 403 A1 offenbart einen thermoelektrischen Sensor des Thermosäulentyps. Die Ausgangssignale des thermoelektrischen Sensors des Thermosäulentyps können auf eine derartige Art und Weise eingestellt werden, dass eine thermoelektrische Struktur zur Empfindlichkeitseinstellung mit einer Mehrzahl von thermoelektrischen Strukturen, die eine Thermosäule bilden, in Reihe geschaltet ist.

Ein gemäß der Lehre der WO 03/089884 A1 ausgebildeter Luftmassenmesser, der als Heißfilmanemometer ausgebildet ist, hat sich prinzipiell bewährt.

Bei der Entwicklung moderner Luftmassenmesser, die auf der Grundlage von Sensorelementen arbeiten, die als mikroelektromechanische Systeme (MEMS) ausgebildet sind, hat sich herausgestellt, dass die Messergebnisse der Sensorelemente besonders von Verschmutzungen nachteilig beeinflusst werden. Durch die Verschmutzung, die zum Beispiel von Öltröpfchen im Luftmassenstrom hervorgerufen werden kann, entsteht im Sensorelement über die Zeit eine Signaldrift, die zu falschen Messwerten für den Luftmassenstrom führen kann. Als mikroelektromechanische Systeme ausgebildete Sensorelemente besitzen jedoch eine Vielzahl von Vorteilen, auf die nicht verzichtet werden soll, und daher ist es eine Aufgabe der Erfindung, die Verfälschung der Messergebnisse durch die Verschmutzung des Sensorelementes zu beseitigen oder zumindest in engen Grenzen zu halten.

Diese Aufgabe wird durch die Merkmale des unabhängigen Anspruchs gelöst. Vorteilhafte Ausführungsformen sind Gegenstand der abhängigen Ansprüche.

Erfindungsgemäß wird die Aufgabe dadurch gelöst, dass das erste Thermopaar oder die ersten Thermopaare und das letzte Thermopaar oder die letzten Thermopaare des Thermoelementes derart gepolt sind, dass jeweils zunächst der zweite metallische Leiter und dann der erste metallische Leiter von dem elektrischen Strom durchflossen werden, wobei die zwischen dem ersten Thermopaar oder den ersten Thermopaaren und dem letzten Thermopaar oder den letzten Thermopaaren angeordneten restlichen Thermopaare des Thermoelementes derart gepolt sind, dass jeweils zunächst der erste metallische Leiter und dann der zweite metallische Leiter vom elektrischen Strom durchflossen werden. Wenn das erste Thermopaar oder die ersten Thermopaare und das letzte Thermopaar oder die letzten Thermopaare des Thermoelementes derart gepolt sind, dass jeweils zunächst der zweite metallische Leiter und dann der erste metallische Leiter von dem elektrischen Strom durchflossen werden, werden die Verfälschungen der Messergebnisse durch Schmutzeffekte im Randbereich des Thermoelementes weitgehend kompensiert, da sich die verpolten Thermopaare im Randbereich des Temperatursensorelementes befinden. Die Umpolung der ersten und letzen Thermopaare verringert zwar etwas die Signalstärke des Thermoelementes, wobei ein Thermoelement aus 1000 oder mehr Thermopaaren bestehen kann, so dass einige umgepolte Thermopaare am Anfang und am Ende des Thermoelementes nur eine sehr geringe Auswirkung auf die Signalstärke haben. Hingegen wird durch diese Gestaltung des Thermoelementes die Langzeitstabilität der Signale signifikant verbessert, da nun die Schmutzeffekte kaum einen Einfluss auf das Messergebniss haben.

Bei einer Weiterbildung der Erfindung weist das Sensorelement ein erstes Temperatursensorelement und ein zweites Temperatursensorelement auf. Mit einem ersten Temperatursensorelement und einem zweiten Temperatursensorelement kann eine Temperaturdifferenz im Massenstrom bestimmt werden, womit der Massenstrom selber bestimmbar ist. Dabei ist es vorteilhaft, wenn das erste Temperatursensorelement stromaufwärts bezogen auf das Heizelement angeordnet ist und das zweite Temperatursensorelement stromabwärts bezogen auf das Heizelement angeordnet ist.

Weitere Merkmale und Vorteile der Erfindung werden nachfolgend unter Beschreibung eines Ausführungsbeispiels mit Bezugnahme auf die Figuren in den Zeichnungen angegeben. Über die verschiedenen Figuren hinweg werden nachfolgend gleiche Begriffe und Bezugszeichen für gleiche Bauelemente verwendet werden. Dabei zeigt:
- Figur 1: einen Luftmassenmesser,
- Figur 2: ein als mikroelektromechanisches System (MEMS)ausgebildetes Sensorelement,
- Figur 3: ein als mikroelektromechanisches System (MEMS) ausgebildetes Sensorelement, das in einem Hilfsrohr des Luftmassenmessers angeordnet ist,
- Figur 4: eine Situation, bei der der Luftmassenstrom durch die Einlassöffnung in das Hilfsrohr des Luftmassenmessers einströmt,
- Figur 5: das als mikroelektromechanisches System (MEMS) ausgebildete Sensorelement in einem Luftmassenmesser, der als Einsteckfinger in einem Ansaugrohr integriert ist,
- Figur 6: das Sensorelement mit dem ersten Temperatursensorelement und dem zweiten Temperatursensorelement,
- Figur 7: das Sensorelement eines Luftmassenmessers mit Thermopiles,
- Figur 8: zeigt ein als Thermoelement ausgebildetes Temperatursensorelement.

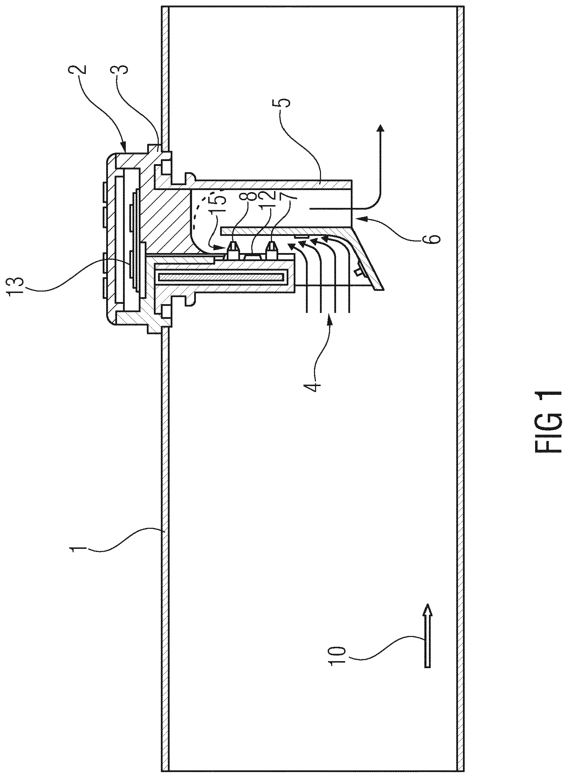

Figur 1 zeigt einen Massenstromsensor der hier als Luftmassenmesser 2 ausgebildet ist. Der Luftmassenmesser 2 ist in diesem Beispiel als Einsteckfinger gezeigt, der in ein Ansaugrohr 1 eingesteckt wird und mit dem Ansaugrohr 1 fest verbunden ist. Das Ansaugrohr 1 führt einen Massenstrom, der hier ein Luftmassenstrom 10 ist, hin zu den Zylindern einer Brennkraftmaschine. Zur effizienten Verbrennung des Treibstoffes in den Zylindern einer Brennkraftmaschine ist es notwendig, eine genaue Information über die zur Verfügung stehende Luftmasse zu erhalten. Anhand der zur Verfügung stehenden Luftmasse kann auf den verfügbaren Sauerstoff geschlossen werden, der zur Verbrennung des in die Zylinder eingespritzten Kraftstoffes notwendig ist. Darüber hinaus zeigt der Luftmassenmesser 2 in Figur 1 ein erstes Temperatursensorelement 7 und ein zweites Temperatursensorelement 8. Das erste Temperatursensorelement 7 und das zweite Temperatursensorelement 8 sind an unterschiedlichen Orten angeordnet. Die Temperatursensorelemente 7, 8 werden in der Regel aus Widerständen oder Thermopiles gebildet, die entsprechend der am jeweiligen Temperatursensorelement herrschenden Temperatur unterschiedliche Widerstandswerte annehmen. Zwischen dem ersten Temperatursensorelement 7 und dem zweiten Temperatursensorelement 8 ist ein Heizelement 12 ausgebildet. Der Teil des Luftmassenstromes 10, der durch die Einlassöffnung 4 in das Gehäuse 3 des Luftmassenmessers 2 eintritt, überströmt zunächst das erste Temperatursensorelement 7 und dann das Heizelement 12, wonach der Luftmassenstrom 10 das zweite Temperatursensorelement 8 erreicht und entlang des Hilfsrohres 5 zur Auslassöffnung 6 des Luftmassenmessers 2 geleitet wird. Der Luftmassenstrom 10 erreicht das erste Temperatursensorelement 7 mit einer bestimmten Temperatur. Diese Temperatur wird vom ersten Temperatursensorelement 7 als Absoluttemperatur erfasst. Danach überstreicht der Luftmassenstrom 10 das Heizelement 12, wobei der Luftmassenstrom 10 je nach vorbeiströmender Masse mehr oder weniger aufgeheizt wird. Wenn der aufgeheizte Luftmassenstrom 10 das zweite Temperatursensorelement 8 erreicht, wird die nun vorliegende Temperatur des Luftmassenstroms 10 mit dem zweiten Temperatursensorelement 8 als Absoluttemperatur bestimmt. Aus der Differenz der vom ersten Temperatursensorelement 7 gemessenen Absoluttemperatur und der vom zweiten Temperatursensorelement 8 gemessenen Absoluttemperatur kann die vorbeigeströmte Luftmasse bestimmt werden. Dazu kann der Luftmassenmesser 2 selber eine Auswerteelektronik 13 enthalten, die die Messsignale des ersten Temperatursensorelementes 7 und des zweiten Temperatursensorelementes 8 auswertet. Die so gewonnene Information über den Luftmassenstrom 10 wird an eine hier nicht dargestellte Motorsteuerung weitergeleitet.

Es sei darauf hingewiesen, dass die Erfindung beispielhaft anhand eines Luftmassenmessers beschrieben wird, was jedoch keine Einschränkung der Erfindung auf die Messung von Luftmassenströmen bedeutet. Mit der erfindungsgemäßen Vorrichtung können auch andere Massenströme vorteilhaft erfasst und vermessen werden. Es ist zum Beispiel denkbar mit der erfindungsgemäßen Vorrichtung den Massenstrom von Kohlenwasserstoffverbindung in einer Spülleitung eines Kohlenwasserstofftanks zu messen.

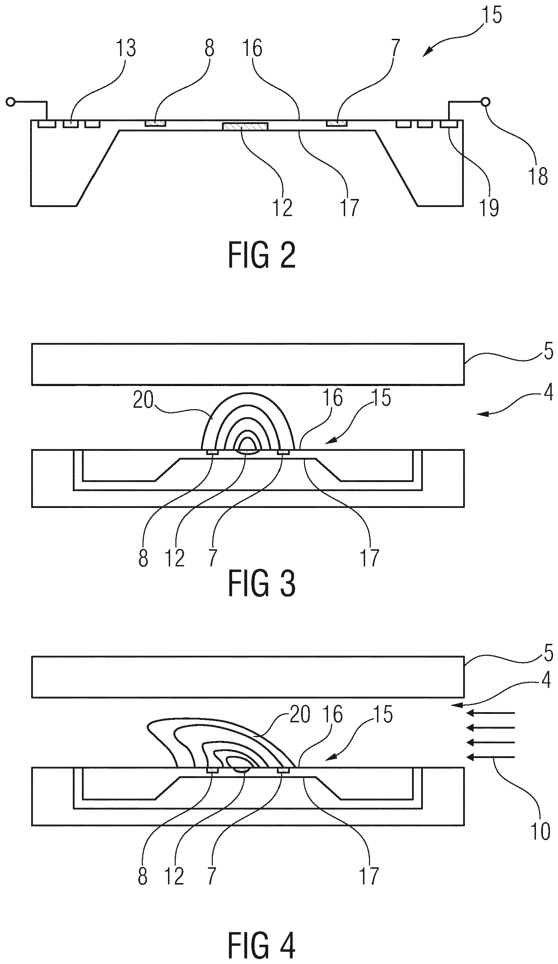

Figur 2 zeigt ein Sensorelement 15 für einen Luftmassenmesser 1. Das Sensorelement 15 ist in als mikroelektromechanisches System (MEMS) auf einem einzigen Silizium-Chip ausgebildet. Das Sensorelement 15 arbeitet nach dem Differenztemperaturverfahren, womit die Masse der vorbeiströmenden Luftmenge 10 bestimmt wird. Hierzu sind auf einer dünnen Membran 17 ein erstes Temperatursensorelement 7 und ein zweites Temperatursensorelement 8 ausgebildet. Das erste und das zweite Temperatursensorelement 7, 8 befinden sich an unterschiedlichen Orten auf der Oberfläche 16 der Membran 17. Zwischen dem ersten Temperatursensorelement 7 und dem zweiten Temperatursensorelement 8 ist ein Heizelement 12 angeordnet. Auf dem als mikroelektromechanisches System aufgebauten Sensorelement 15 ist zudem eine Auswerteelektronik 13 integriert, die die Messsignale der Temperatursensorelemente 7, 8 sofort auswerten und in ein Signal, das proportional zum Luftmassenstrom 10 ist, umwandeln kann. Die Auswerteelektronik 13 kann jedoch ebenso gut in einem nachgeschalteten elektronischen Gerät integriert sein. Die Informationen über den Luftmassenstrom 10 werden dann über Anschlusspads 19 und Anschlussdrähte 18 an eine hier nicht dargestellte nachfolgende elektronische Motorsteuerung weitergeleitet.

In Figur 3 wird ein als mikroelektromechanisches System (MEMS) ausgebildetes Sensorelement 15 für einen Luftmassenmesser 2 gezeigt, das auf einem einzigen Substrat ausgebildet ist, wobei das Substrat in einem Hilfsrohr 5 des Luftmassenmessers 2 angeordnet ist. In Figur 3 strömt durch die Einlassöffnung 4 kein Luftmassenstrom 10, was zum Beispiel bei ausgestellter Brennkraftmaschine der Fall sein wird. Dieser Zustand wird auch als Nullmassenstrom bezeichnet. Wenn das Heizelement 12 auf dem Sensorelement 15 mit elektrischer Energie versorgt wird, entsteht um das Heizelement 12 die hier dargestellte symmetrische Temperaturverteilung 20. Damit misst das erste Temperatursensorelement 7 und das zweite Temperatursensorelement 8 die gleiche Absoluttemperatur und nach der Differenzbildung der Temperaturmesssignale der Temperatursensorelemente 7, 8 wird von der Auswerteelektronik 13 erkannt, dass kein Luftmassenstrom 10 im Hilfsrohr 5 des Luftmassenmessers 2 vorliegt. Diese ideale Gleichheit der Temperaturmesssignale bei einem Nullmassenstrom kann jedoch zum Beispiel durch Verunreinigungen auf dem Sensorelement 15 gestört werden.

Figur 4 zeigt eine Situation, bei der ein Luftmassenstrom 10 durch die Einlassöffnung 4 in das Hilfsrohr 5 des Luftmassenmessers 2 einströmt. Die Temperaturverteilung 20 um das Heizelement 12 wird nun deutlich sichtbar in Richtung des zweiten Temperatursensorelementes 8 verschoben. Damit misst das zweite Temperatursensorelement 8 eine deutlich höhere Temperatur als das erste Temperatursensorelement 7. Durch die Feststellung der Differenztemperatur der beiden Temperatursensorelemente 7, 8 in der Auswerteelektronik 13 lässt sich nun der Luftmassenstrom 10 bestimmen. Jedoch wären die Einflüsse von Verschmutzungen 9 auf dem Sensorelement 15 nach wie vor wirksam und sie würden die Messergebnisse überlagern. Die Summe der Temperaturen reagiert ebenfalls auf den Massenstrom 10. Darüber hinaus reagiert jedoch die Summe der Temperaturen auch auf die thermischen Eigenschaften der Luftmasse, wie zum Beispiel die Wärmekapazität und/oder die thermische Leitfähigkeit des vorbeiströmenden Luftmassenstromes 10. Erhöht sich zum Beispiel bei gleichem Luftmassenstrom 10 die thermische Leitfähigkeit der Luftmasse, so kühlt das System ab und die Summe der Temperaturen wird deutlich geringer. Die Differenztemperatur des ersten Temperatursensorelementes 7 und des zweiten Temperatursensorelementes 8 bleibt jedoch in erster Näherung unverändert. Somit kann durch das Summensignal des ersten Temperatursensorelementes 7 und des zweiten Temperatursensorelementes 8 eine Änderung der thermischen Eigenschaften, wie zum Beispiel der Wärmekapazität, oder der thermischen Leitfähigkeit der Luftmasse gemessen werden. Verrechnet man nun das Differenztemperatursignal mit dem Summentemperatursignal, kann auf die veränderte thermische Leitfähigkeit und/oder die veränderte Wärmekapazität der vorbeiströmenden Luftmasse geschlossen werden.

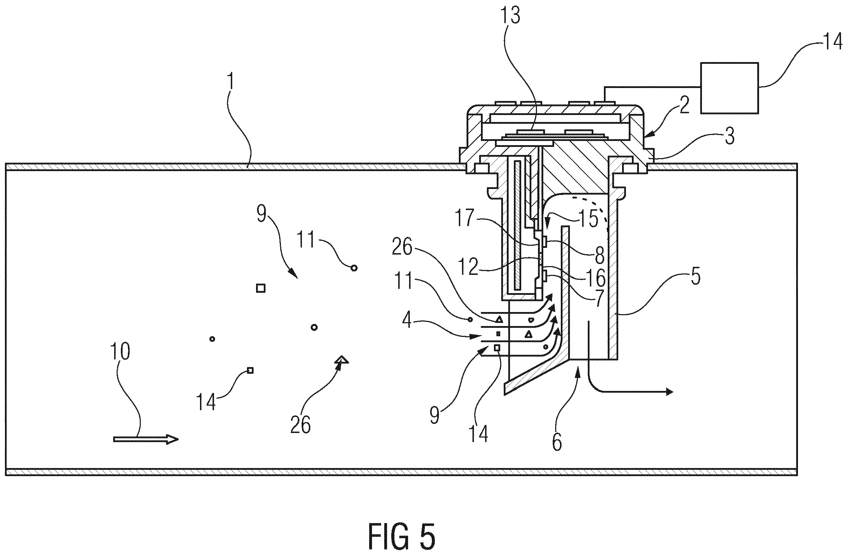

Figur 5 zeigt das Sensorelement 15 des Luftmassenmessers, das als mikroelektromechanisches System (MEMS) ausgebildet ist, in einem Luftmassenmesser 2, der als Einsteckfinger in einem Ansaugrohr 1 integriert ist. Der Luftmassenstrom 10 erreicht auch hier die Einlassöffnung 4 und tritt in das Hilfsrohr 5 ein. Auf der Oberfläche 16 der Membran 17 sind das erste Temperatursensorelement 7 und das zweite Temperatursensorelement 8 zu erkennen. Zwischen dem ersten Temperatursensorelement 7 und dem zweiten Temperatursensorelement 8 ist das Heizelement 12 angeordnet. Der Luftmassenstrom 10 erreicht zunächst das erste Temperatursensorelement 7, überströmt dann das Heizelement 12, um danach das zweite Temperatursensorelement 8 zu erreichen. Das erste Temperatursensorelement 7 ist stromaufwärts bezogen auf das Heizelement 12 angeordnet und das zweite Temperatursensorelement 8 ist stromabwärts bezogen auf das Heizelement 12 angeordnet.

In Figur 5 ist zu erkennen, dass der Luftmassenstrom 10 auch Verschmutzungen 9 beinhaltet. Mit dem Luftmassenstrom 10 werden zum Beispiel Wassertröpfchen 26, Öltröpfchen 11 und/oder Staubteilchen 14 hin zum Luftmassenmesser 2 transportiert. Die Verschmutzungen 9 gelangen durch die Einlassöffnung 4 des Luftmassenmessers 2 bis zum Sensorelement 15. Wenn sich die Verschmutzungen 9 im Bereich des ersten Temperatursensorelementes 7 und des zweite Temperatursensorelementes 8 ablagern, kann es mit der Zeit zu einer massiven Verfälschung des Messwertes für den Luftmassenstrom 10 kommen. Da sich diese Verfälschung durch die Akkumulation der Verschmutzung auf dem Sensorelement 15 über einem langen Zeitraum immer weiter aufbaut, spricht man in diesem Zusammenhang auch von einer Singaldrift des Luftmassenmessers 2. Dieser Signaldrift ist unerwünscht und sie sollte unterdrückt und/oder kompensiert werden.

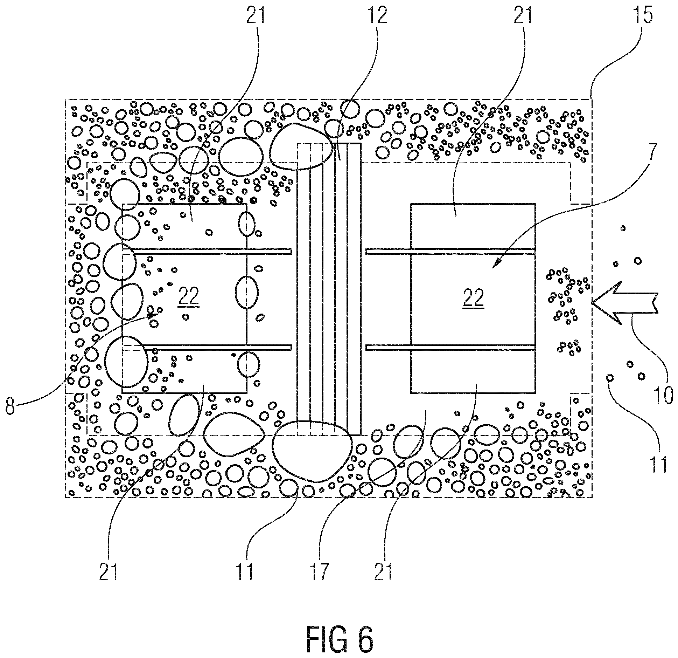

Figur 6 zeigt das Sensorelement 15 mit dem ersten Temperatursensorelement 7 und dem zweiten Temperatursensorelement 8 sowie dem zwischen den Temperatursensorelementen 7 und 8 angeordneten Heizelement 12. Mit dem Pfeil ist die Richtung des Luftmassenstromes 10 dargestellt. Damit befindet sich in der Strömungsrichtung des Luftmassenstromes 10 das erste Temperatursensorelement 7 vor dem Heizelement 12 und das zweite Temperatursensorelement 8 hinter dem Heizelement 12. Sowohl das erste Temperatursensorelement 7 als auch das zweite Temperatursensorelement 8 setzen sich in diesem Beispiel als elektrische Reihenschaltungen aus einem Messwiderstand 22 und mindestens zwei Vergleichswiderständen 21 zusammen. Es ist zu erkennen, dass die Messwiderstände 22 im inneren Bereich der dünnen Membran angeordnet sind, und die Vergleichswiderstände 21 im Randbereich der Membran 17 angeordnet sind.

Weiterhin zeigt die Figur 6, dass Verschmutzungen 9, und hierbei vornehmlich Öltröpfchen 11, mit dem Massenstrom 10 zu dem Sensorelement 15 transportiert werden. Insbesondere die Öltröpfchen 11 lagern sich auf dem Sensorelement 15 ab. Es ist deutlich zu erkennen, dass die Ablagerung der Öltröpfchen 11 auf dem Sensorelement 15 besonders stark im Bereich des zweiten Sensorelements 8 erfolgt, welches in Strömungsrichtung des Luftmassenstromes 10 dem Heizelement 12 nachgelagert ist. Diese unsymmetrische Ablagerung von Öltröpfchen 11 auf dem Sensorelement 15 führt zu einer Signaldrift, die letztlich zur Verfälschung der vom Sensorelement 15 erfassten Absoluttemperatur und damit zur Verfälschung des Messwertes für den Luftmassenstrom 10 führt. Darüber hinaus erfolgt die Ablagerung der Verschmutzungen bevorzugt im Randbereich der Membran 17. Die unsymmetrische Ablagerung der Öltröpfchen 11 hat physikalische Gründe, die ihren Ursprung insbesondere in der höheren Temperatur im Bereich des zweiten Sensorelementes 8 und im Temperaturgradienten im Randbereich der Membran 17 finden.

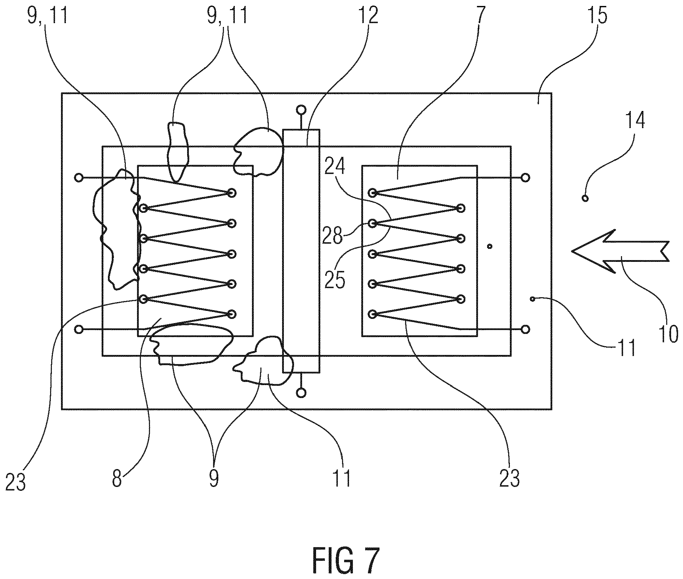

Figur 7 zeigt das Sensorelement 15 eines Luftmassenmessers 2. Das erste Temperatursensorelement 7 und das zweite Temperatursensorelement 8 dieses Sensorelementes 15 sind als Thermoelement 23 ausgebildet. Thermoelemente 23, die auch als Thermopiles 23 bezeichnet werden, wandeln Wärme in elektrische Energie um. Thermoelemente 23 bestehen aus Thermopaaren 29, die Drähte aus zwei unterschiedlichen Metallen aufweisen, die an einem Ende miteinander verbunden sind. Eine Temperaturdifferenz erzeugt aufgrund des Wärmeflusses im Metall eine elektrische Spannung.

Als Seebeck-Effekt wird das Auftreten einer elektrischen Potentialdifferenz zwischen zwei Stellen unterschiedlicher Temperatur eines Leiters bezeichnet. Die Potentialdifferenz ist annähernd proportional zur Temperaturdifferenz und sie hängt vom Leitermaterial ab. Wenn die Enden eines einzigen Leiters zur Messung auf gleicher Temperatur liegen, heben sich die Potentialdifferenzen stets auf. Verbindet man jedoch zwei unterschiedliche Leitermaterialien miteinander, entsteht ein Thermoelement 23. Bei Messsystemen auf der Basis des Seebeck-Effektes werden in der Regel sehr viele einzelne Thermopaare 23 elektrisch in Reihe geschaltet.

Bei der Auswahl von Materialpaaren zu Messzwecken sollte eine möglichst hohe erzeugte Thermospannung verbunden mit einer hohen Linearität zwischen Temperaturänderung und Spannungsänderung erreicht werden. Die in Figur 7 gezeigten Thermoelemente 23 bestehen aus einer Abfolge eines jeweils ersten Metalls 24, das an einer Verbindungsstelle 28 mit einem zweiten Metall 25 verbunden ist.

In Figur 7 ist deutlich zu erkennen, dass im Bereich des zweiten Temperatursensorelementes 8, das aus einem Thermoelement 23 gebildet ist, Verschmutzungen 9 vornehmlich in Form von Öltröpfchen 11 abgelagert sind. Diese Verschmutzungen 9 führen zu einer Verfälschung der von den Temperatursensorelementen 7 und 8 gemessenen Absoluttemperaturen. Die hieraus resultierende Signaldrift wurde schon in der Beschreibung der vorgenannten Figuren erwähnt.

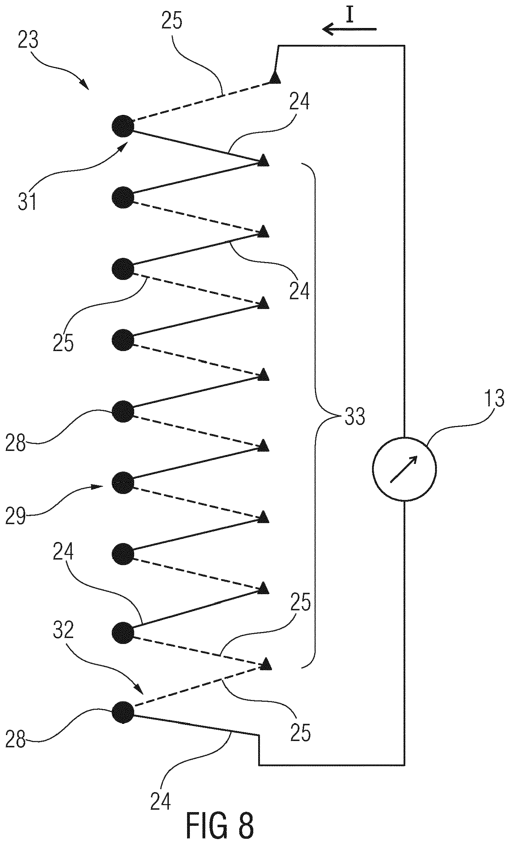

Figur 8 zeigt ein als Thermoelement 23 ausgebildetes Temperatursensorelement, wie es zum Beispiel auf dem Sensorelement 15 als erstes Temperatursensorelement 7 und als zweites Temperatursensorelement 8 ausgebildet sein kann. Das Thermoelement 23 zeigt eine Vielzahl von Thermopaaren 29. Die Anzahl der Thermopaare 29 kann 1000 oder mehr Thermopaare 29 pro Thermoelement 23 betragen. Ein Thermopaar 29 setzt sich aus einem ersten metallischen Leiter 24 und einem zweiten metallischen Leiter 25 zusammen. Der erste metallische Leiter 24 und der zweite metallische Leiter 25 bestehen aus unterschiedlichen Metallen. Der erste metallische Leiter 24 kann zum Beispiel aus Eisen bestehen, während der zweite metallische Leiter 25 aus Kupferdraht gebildet wird. Der erste metallische Leiter 24 und der zweite metallische Leiter 25 sind an einer Verbindungsstelle 28 miteinander elektrisch verbunden. Ein Thermoelement 23 wird durch eine Vielzahl miteinander elektrisch in Reihe geschalteter Thermopaare 29 gebildet. In Fig. 8 ist es zu erkennen, dass das erste Thermopaar 31 derart gepolt ist, dass zunächst der zweite metallische Leiter 25 vom elektrischen Strom I durchflossen wird und danach der erste Leiter 24 vom elektrischen Strom I durchflossen wird. Auch beim letzten Thermopaar 32 ist die Abfolge der metallischen Leiter derart gewählt, dass zunächst der zweite metallische Leiter 25 und dann der erste metallische Leiter 24 vom elektrischen Strom I durchflossen werden. Die restlichen Thermopaare 33 sind dann derart gepolt, dass zunächst der erste metallische Leiter 24 vom elektrischen Strom I durchflossen wird und danach der zweite metallische Leiter 25 vom elektrischen Strom durchflossen wird. Die Verpolung, also die Änderung der Abfolge der metallischen Leiter, des ersten Thermopaares 31 oder der ersten Thermopaare 31 und des letzten Thermopaares 32 oder der letzten Thermopaare 32 des Thermoelementes gegenüber dem restlichen Thermopaaren 33 des Thermoelementes führt zu einer über sehr lange Zeiten stabile Signalcharakteristik des gesamten Thermoelementes 23. Verschmutzungen, die sich insbesondere im Randbereich, also im Bereich der verpolten Thermopaare, des zweiten Temperatursensorelementes 8 anlagern, haben durch die erfindungsgemäße Ausgestaltung des Thermoelementes 23 kaum Auswirkungen auf die Signalqualität und die Langzeitstabilität der Messergebnisse des Temperatursensorelementes. Ein nach Figur 8 ausgebildetes Thermoelement 23 weist somit über einen sehr langen Zeitraum eine hohe Signalstabilität auf und liefert genaue und hochwertige Messergebnisse.

## Patentansprüche

1. Luftmassenmesser (2) mit einem in mikroelektromechanischer Bauweise ausgebildetem Sensorelement (15), das ein Heizelement (12) und mindestens ein Temperatursensorelement (7, 8) aufweist, wobei das Temperatursensorelement (7,8) als Thermoelement (23) ausgebildet ist, wobei das Thermoelement (23) aus einer Vielzahl von in Reihe geschalteten Thermopaaren (29, 31, 32, 33) besteht, die nacheinander vom einem elektrischen Strom (I) durchflossen werden und wobei ein Thermopaar (29, 31, 32, 33) aus einem ersten metallischen Leiter (24) und einem zweiten metallischen Leiter (25) besteht, die an jeweils einem Ende durch eine Verbindungsstelle (28) miteinander verbunden sind und wobei der erste metallische Leiter (24) und der zweite metallische Leiter (25) aus unterschiedlichen Metallen ausgebildet sind, **dadurch gekennzeichnet, dass** das erste Thermopaar (31) oder die ersten Thermopaare und das letzte Thermopaar (32) oder die letzten Thermopaare des Thermoelementes (23) derart gepolt sind, dass jeweils zunächst der zweite metallische Leiter (25) und dann der erste metallische Leiter (24) von dem elektrischen Strom (I) durchflossen werden, wobei die zwischen dem ersten Thermopaar (31) oder den ersten Thermopaaren und dem letzten Thermopaar (32) oder den letzten Thermopaaren angeordneten restlichen Thermopaare (33) des Thermoelementes (23) derart gepolt sind, dass jeweils zunächst der erste metallische Leiter (24) und dann der zweite metallische Leiter (25) von dem elektrischen Strom (I) durchflossen werden.

2. Luftmassenmesser (2) nach Anspruch 1, **dadurch gekennzeichnet, dass** das Sensorelement (15) ein erstes Temperatursensorelement (7) und ein zweites Temperatursensorelement (8) aufweist.

3. Luftmassenmesser (2) nach Anspruch 2, **dadurch gekennzeichnet, dass** das erste Temperatursensorelement (7) stromaufwärts bezogen auf das Heizelement (12) angeordnet ist und das zweite Temperatursensorelement (8) stromabwärts bezogen auf das Heizelement (12) angeordnet ist.

## Claims

1. Air mass flowmeter (2) having a sensor element (15) which is of microelectromechanical design and has a heating element (12) and at least one temperature sensor element (7, 8), wherein the temperature sensor element (7, 8) is in the form of a thermal element (23), wherein the thermal element (23) comprises a large number of thermocouples (29, 31, 32, 33) which are connected in series and through which an electric current (I) flows in succession, and wherein a thermocouple (29, 31, 32, 33) comprises a first metal conductor (24) and a second metal conductor (25) which are connected to one another in each case at an end by a connecting point (28), and wherein the first metal conductor (24) and the second metal conductor (25) are formed from different metals, **characterized in that** the first thermocouple (31) or the first thermocouples and the last thermocouple (32) or the last thermocouples of the thermal element (23) are polarized in such a way that the electric current (I) in each case initially flows through the second metal conductor (25) and then the first metal conductor (24), wherein the remaining thermocouples (33) of the thermal element (23), which remaining thermocouples are arranged between the first thermocouple (31) or the first thermocouples and the last thermocouple (32) or the last thermocouples, are polarized in such a way that the electric current (I) in each case initially flows through the first metal conductor (24) and then the second metal conductor (25).

2. Air mass flowmeter (2) according to Claim 1, **characterized in that** the sensor element (15) has a first temperature sensor element (7) and a second temperature sensor element (8).

3. Air mass flowmeter (2) according to Claim 2, **characterized in that** the first temperature sensor element (7) is arranged upstream in relation to the heating element (12), and the second temperature sensor element (8) is arranged downstream in relation to the heating element (12).

## Revendications

1. Mesureur de masse d'air (2) comprenant un élément capteur (15) dont la structure est réalisée de manière microélectromécanique, qui comporte un élément chauffant (12) et au moins un élément capteur de température (7, 8), dans lequel l'élément capteur de température (7, 8) est réalisé sous la forme d'un élément à thermocouples (23), dans lequel l'élément à thermocouples (23) est constitué d'une pluralité de paires de thermocouples (29, 31, 32, 33) montés en série, qui sont parcourus les uns après les autres par un courant électrique (I) et dans lequel une paire de thermocouples (29, 31, 32, 33) est constituée d'un premier conducteur métallique (24) et d'un deuxième conducteur métallique (25), qui sont respectivement reliés l'un à l'autre à une extrémité par un point de liaison (28) et dans lequel le premier conducteur métallique (24) et le deuxième conducteur métallique (25) sont réalisés à partir de métaux différents, **caractérisé en ce que** la première paire de thermocouples (31) ou les premières paires de thermocouples et la dernière paire de thermocouples (32) ou les dernières paires de thermocouples de l'élément à thermocouples (23) sont polarisées de telle manière que le deuxième conducteur métallique (25) d'abord, puis le premier conducteur métallique (24) soient respectivement parcourus par le courant électrique (I), dans lequel les autres paires de thermocouples (33) de l'élément à thermocouples (23), qui sont disposées entre la première paire de thermocouples (31) ou les premières paires de thermocouples et la dernière paire de thermocouples (32) ou les dernières paires de thermocouples, sont polarisées de telle manière que le premier conducteur métallique (24) d'abord, puis le deuxième conducteur métallique (25) soient parcourus par le courant électrique (I).

2. Mesureur de masse d'air (2) selon la revendication 1, **caractérisé en ce que** l'élément capteur (15) comporte un premier élément capteur de température (7) et un deuxième élément capteur de température (8).

3. Mesureur de masse d'air (2) selon la revendication 2, **caractérisé en ce que** le premier élément capteur de température (7) est disposé en amont de l'élément chauffant (12) et **en ce que** le deuxième élément capteur de température (8) est disposé en aval de l'élément chauffant (12).
